# EUROPEAN PATENT SPECIFICATION

(11) **EP 3 632 762 B1**
(45) Date of publication and mention of the grant of the patent: **15.06.2022**
(21) Application number: 19195121.9
(22) Date of filing: 03.09.2019
(51) Int. Cl.: B60W 50/00, B60W 50/02, B60W 50/029, B60W 50/038, B60W 50/14

(54) **AN OVER RIDE SYSTEM**
ÜBERSTEUERUNGSSYSTEM
SYSTÈME DE COMMANDE PRIORITAIRE

(30) Priority: 04.09.2018 IN 201841033135
(43) Date of publication of application: 08.04.2020
(73) Proprietor: TVS Motor Company Limited, Chennai 600006 (IN)
(72) Inventor: JANARTH, Ramasamy Vijaya Velusamy, 600006 Chennai (IN); MANIKANDAN, Thalakkupandian, 600006 Chennai (IN); SIVAKUMAR, Arumugham, 600006 Chennai (IN)
(74) Representative: Patentanwaltskanzlei Matschnig & Forsthuber OG

(56) References cited:
- EP-A1- 2 189 346
- WO-A1-2013/061339
- DE-A1-102010 062 484
- DE-A1-102014 218 077
- US-A1- 2011 208 378
- US-A1- 2014 074 335
- US-A1- 2015 191 122

## Description

The present subject matter generally relates to a vehicle. More particularly but not exclusively the present subject matter relates to a system to override the powertrain cut-off condition for saddle type vehicle.

### BACKGROUND

Automated engine shutdown systems or motor vehicles and the like have been devised which automatically shut down the operation of the engine whenever abnormal operation condition is detected by the control unit. Operating condition can be low engine oil pressure or dangerously high coolant temperature or any malfunction of a component which is integrated with the operation of the ignition system.

Although such systems are increasingly incorporated into the vehicle, making them more sophisticated in operation, Nearly every system present in the modern automobile is controlled and regulated by on-board computers especially the ignition system and the transmission functions. Most of the automatic transmission systems in vehicle are electronic which means that the transmission system entirely depends on the computer or the on-board control unit to control all of its function and the timing for proper operation. Other system also works in unison with the electronic transmission system.

Limp mode condition is a situation when the control unit of the vehicle realizes that a problem has occurred in executing the programming logic which often results in a dysfunction of the vehicle. The error occurring in the execution of the programming logic may result due to the malfunction of any component like a dedicated sensor to perform a dedicated function. During such situations, there exists a probability that A malfunctioning sensor may start sensing unexpected signal value which may not lie within the predetermined range. Alternatively, in a worst case scenario the sensor itself gets damaged or the electrical connection may be affected. Such system failures can lead to a potential problem of error in the functioning of the limp home condition itself. But in such scenario the control unit is programmed to function in an emergency situation.

In such case the control unit, governing the functioning of the drive unit such as an engine or an electric motor, may have the capacity to the set the drive unit in Limp mode, which enables the user of the vehicle to start the drive unit and set the vehicle into drive mode, based on input from the user. However, such override can lead to user being stranded during traveling owing to eventual failure of the vehicle & loss of mobility. Additionally, ill-informed override by the user can lead to irreparable damage to valuable components (e.g. power transmission overheating, wear & tear, etc.) of the vehicle & subsequent penalty in the form of high cost of repair / service to the owner of the vehicle. A control unit programmed to activate or function in emergency can lead to potential accident risk to the user in case such an action sets in when the vehicle is being driven especially at high speeds e.g. power train being switched OFF mid-way during running owing to malfunction detection by sensor / controller. In a typical 4-wheeled vehicle, e.g. a car, such scenario may lead to vehicle coming to a halt in a coast-down condition & driver may have a chance to de-clutch the vehicle & bring it to a safe halt on one side of the road. In a automatic transmission system, such scenario becomes more ominous & unsafe. However, the challenge in a saddle type vehicle e.g. a step through two-wheeler is much more complex. In addition to quickly declutching the vehicle, the rider has an additional challenge of ensure stability & control of the balance of the vehicle to avoid capsize or fall and at same time be able to bring the vehicle safely to halt which is enormously risky at higher speeds. With automatic transmission, this problem is further aggravated in a saddle type vehicle. DE102010062484A1 discloses a device and a method to initiate limp home operation when any malfunction or error leads to engine/motor shut down. The driver is informed about the malfunction and the potentially dangerous situation so that the driver can decide and initiate the emergency operation. The risk value of the emergency operation is determined on the basis of severity of the malfunction. Hence, the judgment of the driver is involved to initiate the emergency operation. The confirmation of the emergency operation by the driver can be done by a certain sequence of brake and accelerator pedal operations.

### BRIEF DESCRIPTION OF THE DRAWINGS

Figure 1 illustrates a side view of the exemplary two-wheeled vehicle, in accordance with an embodiment of the present subject matter.
Figure 2 illustrates a where override sequence is achieved by using a single override sequence.
Figure 3 illustrates a where override sequence is achieved by using a multiple override sequence.
Figure 4 illustrates a block diagram of the present subject matter for a vehicle powered by an IC engine.
Figure 5 illustrates a block diagram of the present subject matter for a vehicle powered by an electric engine.
Figure 6 illustrates a block diagram of the present subject matter for a vehicle powered by both an IC engine and an electric motor.

### DETAILED DESCRIPTION

Systems such as the automated shut down of the engine, arising out of any malfunction, are not the best solution to the problem of system failure because there might be situation where the rider might get stranded in a place where there is limited or no access to repair services or alternate mode of transport. Such unforeseen loss in mobility due to system failure or eventual loss of mobility owing to override can lead to irritation to the user as well as potential risk of being stranded. Also, decision based on the intention of the driver to actuate the override condition or not may pose a danger to the driver as driver's judgment may fail to understand the gravity of the situation. Therefore there is a need of a system which can generate suitable upfront intimation /warning or provide an alternative solution which may allow the user to re-initiate the vehicle without affecting the power transmission system.

Modern vehicles have plethora of sensors installed in the vehicle for dedicated functions. Side stand sensor is one such sensor which indicates the status of the side stand and may also control the ignition system of the vehicle.

The ignition cut-off mechanism if provided in the vehicle may be governed by the status of the side stand switch. If the side stand is in ON state then the ignition start up function gets disabled and the vehicle remains in immobile state.

But there are chances when the vehicle remains in the immobile state and fails to start the ignition system when the side stand switch is either damaged or when there is malfunctioning of the side stand switch like improper operation, loose connection, damage to the signal wires etc. In such situation it becomes difficult for the user to operate a vehicle and the user might get stranded at one location rendering the vehicle immobile. If there is any malfunction like loose connection, then vehicle may switch ON or OFF in erratic fashion which may not only cause inconvenience but also pose threat to the safety of the user of the vehicle.

Hence, the object the present invention is to provide an intelligent failsafe override system overcoming all the above stated problems & enabling a saddle type vehicle to be brought to safe halt with an effective limp home mode functionality. As per an aspect of the present invention, the override system overrides the ignition off condition arising out of malfunctioning of the side stand switch of the vehicle thereby ensuring mobility & enhancing the utility of the vehicle while still safe guarding the critical vehicle components from catastrophic / irreparable damage. Also, another object of the present invention is to provide override system for powertrain cut-off wherein the power train is an engine or an electric motor or both.

As per Another embodiment of the present invention, if a powertrain controlling means malfunctions then the user of the vehicle follows simple steps of actuation using input devices which allows the vehicle user to re-initiate the powertrain in an informed failsafe manner. The actuation process involving a specific & intelligent sequence of actuation of input devices that allows the customer to override the ignition cut off status of the engine.

Another embodiment provides a powertrain cut-off override system where the override sequence is either a single sequence or a multiple sequence using one or more input units to achieve the actuation of the powertrain and thereby enabling the functioning of powertrain.

Yet another embodiment of the present subject matter provides one or more vehicle controller to monitor the input devices once the ignition key is turned ON. The specific sequence for actuation is checked and if the sequence of actuation of input units is correct the controller overrides the powertrain cut off signal and enables the powertrain to be switched ON, allowing the vehicle to get started. This override condition allows the user to operate vehicle in limp mode to avoid any inconvenience like getting stranded due to powertrain controlling means failure such as side stand switch failure.

Another embodiment of the present subject matter is to provide multiple input units to actuate the ignition of the vehicle through specific sequences which can be read by the vehicle controller.

Yet another embodiment of the present subject matter is to provide a vehicle controller which enables the powertrain to be switched ON only in a condition where the override sequence from one or more input unit is achieved within a period of time from the moment the ignition key is turned ON and if the override sequence is not entered by the user using one or more input unit within a pre-determined period of time then the vehicle's power train remains in OFF condition.

In yet another embodiment of the present subject matter allows multiple override sequence attempts by resetting the ignition key which allows the user to enter the sequence if any error occurs manually or when the user cannot enter the sequence due to some other reasons like forgetfulness or wrong entry of sequence or failed to enter the override sequence within predetermined time period.

Another embodiment of the present subject matter provides predetermined period of time to enter input unit or a combination of plurality of inputs to set out an override sequence in order to actuate the powertrain. The predetermined period of time prevents unintentional execution of the override sequence during normal vehicle operation condition therefore working as a control.

In another embodiment the vehicle controller recognizes the override sequence and enables the powertrain and blinks the warning lamp to indicate that the override logic has been enabled in an informed manner. The warning lamp can be a dedicated lamp or any warning lamp such as side stand switch lamp or an indication on an instrument cluster display.

In another embodiment of the present subject matter the vehicle controller allows the vehicle to remain in moving state when running at a speed higher than a predetermined value which may help in preventing accidents due to sudden cut-off of the powertrain by the inoperability or malfunction of the side switch stand. The vehicle controller ignores the powertrain cut-off signal sent from the controlling means. The vehicle controller keeps the vehicle in running condition until the speed comes below the threshold.

These and other advantages of the present subject matter would be described in greater detail in conjunction with the figures in the following description.

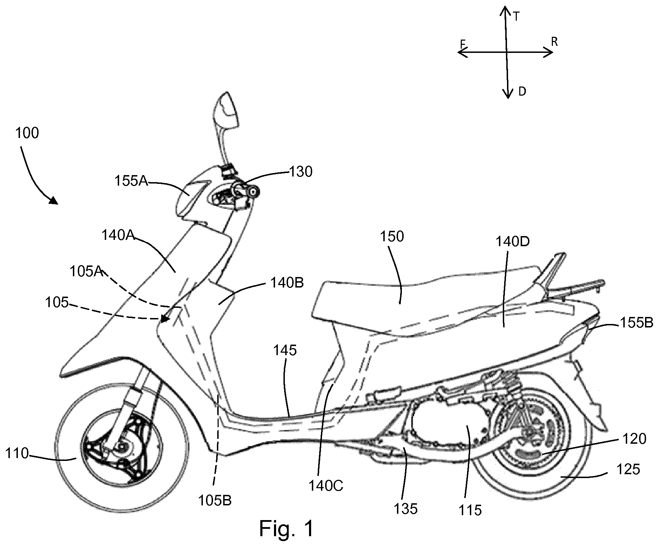

**Fig. 1** illustrates a left side view of an exemplary motor vehicle (100), in accordance with an embodiment of the present subject matter. The vehicle (100) illustrated, has a frame member (105). In the present embodiment, the frame member (105) is step-through type including a head tube (105A), and a main frame (105B) that extend rearwardly downward from an anterior portion of the head tube (105A). The main frame (105B) extends inclinedly rearward to a rear portion of the vehicle (100).

The vehicle (100) includes one or more prime movers that are connected to the frame member (105). In the present implementation, one of the prime movers is an internal combustion (IC) engine (115) mounted to the frame member (105). In the depicted embodiment, the IC engine (115) is mounted to a structural member (135) that is pivoted to the frame member (105). In one embodiment, the structural member (135) is a rigid member made including metal. The vehicle (100) also includes another prime mover, which is an electric motor (120). In a preferred embodiment, the electric motor (120) is hub mounted to one wheel of the vehicle (100). In another embodiment, one or more than one electric motor is mounted to wheels or to the frame of the vehicle. In the depicted embodiment, the vehicle (100) includes at least two-wheels and the electric motor (120) is hub mounted to the rear wheel (125) of the vehicle. A front wheel (110) is rotatably supported by the frame member (105) and is connected to a handle bar assembly (130) that enables maneuvering of the vehicle (100).

Further, the vehicle (100) includes a high capacity on-board battery (not shown) that drives the electric motor (120). The high capacity battery may include one or more high capacity battery packs or one or more low capacity cells. The high capacity battery can be disposed at a front portion, a rear portion, or at the center of the vehicle (100). The high capacity battery is supported by the frame member (105) and the vehicle (100) includes plurality of body panels, mounted to the frame member (105) for covering various components of the vehicle (100). The plurality of panels includes a front panel (140A), a leg shield (140B), an under-seat cover (140C), and a left and a right-side panel (140D). A glove box may be mounted to a leg shield (140B).

A floorboard (145) is provided at the step-through portion defined by the main tube (105B). A seat assembly (150) is disposed rearward to the step-through portion and is mounted to the main frame (105B). The seat assembly (150) that is elongated in a longitudinal direction F-R of the vehicle (100) enables the user to operate the vehicle in a saddle ride-type posture. One or more suspension(s) connect the wheels (110), (125) to the vehicle (100) and provide a comfortable ride. The vehicle (100) comprises of plurality of electrical and electronic components including a headlight (155A), a taillight (155B), a starter motor (not shown), a horn etc. Also, the vehicle (100) includes a master control unit (not shown) that takes control of the overall operation of the vehicle (100) including the function of the IC engine (115), the electric motor (120), charging of the batteries from a magneto/integrated starter generator (ISG), driving of loads by the magneto/ISG, charging of the high capacity batteries by the electric motor operating in generator mode, and any other operations associated with the operation of the vehicle (100). The vehicle (100) shown in fig. 1 is an exemplary vehicle and the present subject matter can be used in a two-wheeled vehicle, three-wheeled vehicle or a four-wheeled vehicle.

Hence, the object of the present subject matter is to provide an override system through which the user can override the ignition cutoff or powertrain cut-off.

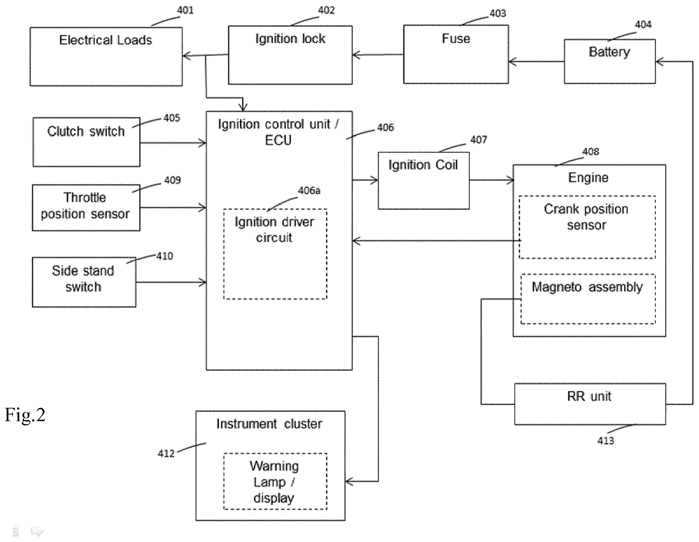

**Fig.2** illustrates the block diagram of the present subject matter for a vehicle powered by an IC engine. The figure represents various elements interconnected to each other. The ignition control unit or the ECU (406) comprising an ignition driver circuit (406a) which sends signal to the ignition coil (407) to cause ignition and drive the engine assembly (408) comprising crank position sensor and magneto assembly. The ECU (406) comprising an ignition driver circuit (406a) is controlled by the vehicle controller (506). The magneto assembly connected to a regulator rectifier unit (RR unit) (413) to regulate the high voltage and converting the alternate current into direct current to be fed into a power supply source (like a battery) (404) in order to charge it. The power supply source (404) supplies the necessary current for the functioning of the components like an ignition lock (402), electrical loads (401). Other components like a clutch switch (405), throttle position sensor (409), side stand switch (410), speedometer (412) consisting a warning lamp and a display to indicate several parameters to indicate the health of the vehicle and the components essential for the working of the vehicle.

Since there are several inputs in a vehicle, each of the inputs can be configured to feed an override sequence to override ignition cut-off and enable the ignition of the vehicle.

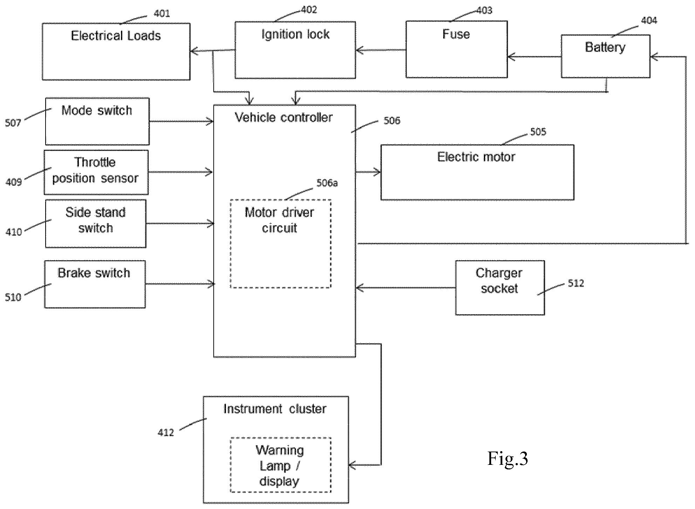

**Fig. 3** illustrates the block diagram to depict the overall layout of the vehicle run by an electric motor. Similar to a vehicle run on an engine the motor can act as a powertrain. If the side stand switch (410) gets damaged or starts malfunctioning a power cut-off signal will be send to the vehicle controller (506) which comprises of a motor driver circuit (506a). The vehicle controller (506) instructs the motor driver circuit (506a) to shut the functioning of the electric motor and halts the vehicle. Although the vehicle stops running but the battery still provides power supply to other components like electric loads (401), fuse (403), ignition lock (402), mode switch (507), throttle position sensor (409), brake switch (510) and other input devices depending on the vehicle configuration. In order to re-start the electric motor (505) the user switches ON the ignition lock (402) and feeds the override sequence through a input unit or a combination of units with in 'Z' time interval to override the power cut-off from the electric motor (505) which is standalone mounted on the wheel hub of the vehicle or mounted on the frame.

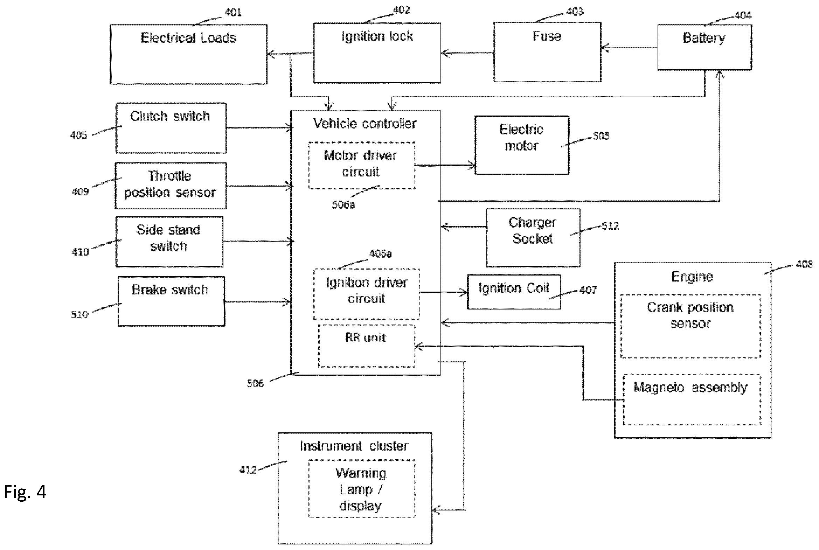

**Fig. 4** illustrates block diagram of a hybrid vehicle where the vehicle is supported by plurality of powertrains - an engine and an electric motor. Both powertrains are controlled by a vehicle controller (506) where in case of hybrid vehicle the vehicle controller (506) controlling both motor driver circuit (506a) and ignition driver circuit (406a). When the side stand switch (410) breaks down or starts malfunctioning then ignition cut-off signal is sent to the vehicle controller (506a) which signals both the motor driver circuit (506a) as well as the ignition driver circuit (406a) to stop the electric motor (505) and engine (408) from running the vehicle. In order to override the ignition cut-off and power cut-off the user feeds override sequence through an input unit or combination of one or more unit after the ignition lock (402) is switched ON within a predetermined quantum of time determined by the manufacturer or user or service team.

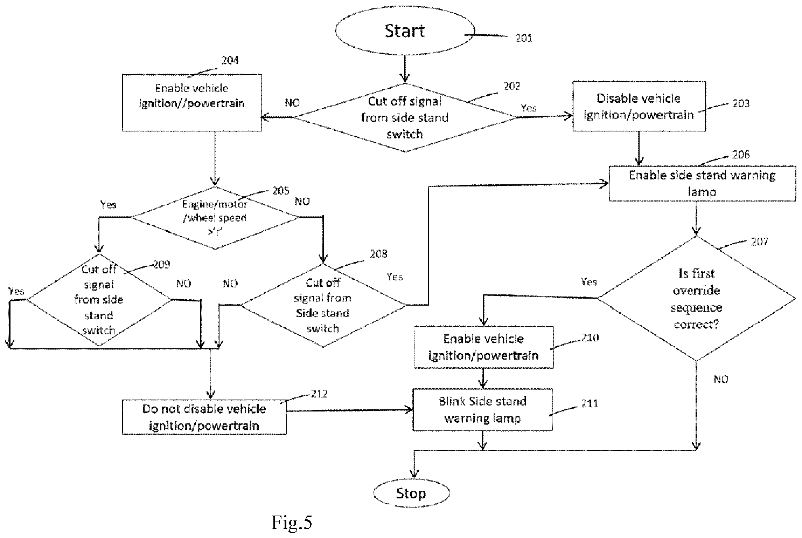

**Fig. 5** illustrates an embodiment of the present subject matter where powertrain cut-off override is achieved by feeding a single override sequence through one input unit e.g. clutch switch, throttle position sensor etc. In step 201 in order to start the ignition the ignition key is turned ON. Then the ignition system controller checks for the cut off signal from the side stand switch (410) (refer fig.4) in step 202. If there is no ignition cut-off signal or powertrain cutoff signal received by the vehicle controller (506) then in step 204 the powertrain of the vehicle (100) get started otherwise the vehicle controller (506) receives the powertrain cut-off signal from the side stand switch (410) and the vehicle powertrain gets disabled in step 203. When the powertrain is in ON state, it is necessary to check for the speed at which the vehicle is running., The working of the side stand switch (410) giving an activation signal to the controller may have negative consequence on the vehicle running at higher speed. Sudden powertrain cut off at a high speed may cause fatal accident. Therefore, it is important that the side stand switch (410) functions properly and if not, the side switch stand should not disturb the vehicle when running at higher speed for safety purpose. Therefore, the vehicle controller (506) checks for the speed of the vehicle in step 205 which is dependent on the rotations per minute. If the RPM (rotations per minute) of the engine or the motor is greater than a predetermined speed value 'r' (value set by the manufacturers or user or service centre etc.) then in step 209, the vehicle controller (506) checks for any fault in the side stand switch (410) or erratic functioning of the side stand sensor. In both the condition, the side stand signal will not have any effect on the vehicle (100) as well as on the powertrain system (comprising either an engine or a battery run electric motor). The vehicle (100) remains in the running state till the RPM remains greater than predetermined value of 'r'. But when the engine RMP falls below the value 'r' further the vehicle controller (506) constantly scans for the status of the side stand switch (410) for the powertrain cut-off signal in step 208. In step 212, the powertrain does not get disable if the cut - off signal is not received. Under this condition if, due to any malfunction, damage, or erratic functioning of the side stand switch, the side stand sensor gives the cutoff signal (410) the side stand warning lamp gets enabled in step 206. Whenever the side stand switch (410) gets damaged or it starts malfunctioning, the side stand warning lamp gets enabled giving advance intimation to the rider. Other than side stand warning lamp as an alert means for failed controlling means (e.g. a side stand switch (410) controlling the powertrain function), an instrument cluster display can also be used as an alternate alert means.

In order to overcome the disabled condition of the powertrain the user can override the situation by using one input unit or combination of input units to feed override sequence and re initiate the powertrain system.

In order to enter override sequence, the ignition key is turned ON after which the user gets fixed quantum of time to enter the sequence otherwise if the user fails to enter or enters wrong override sequence, the vehicle remains in cut-off and again the user has to feed override sequence by switching OFF the ignition key and turning it ON again. It is necessary to keep the quantum of time to feed the override sequence limited in order to avoid any involuntary feeding of the sequence by the user.

In one of the embodiment single override sequence is fed to the vehicle controller (506). A clutch switch is used as an input unit to feed override sequence to overcome the powertrain cut-off condition. In step 207, after the ignition key is switched ON, from the moment of switching ON the ignition key, within 'Z' seconds the clutch switch is pressed 'X' number of times where value of time 'Z' seconds & the number of clutch presses "X" is set by the manufacturers during vehicle (100) production. As per an embodiment, it may be enabled for the user or the service team to set the value.

If the condition in step 207 gets satisfied then the vehicle ignition system controller re initiates the ignition system of the vehicle in step 210 and the side stand warning lamp keeps on blinking (step 211) till the time the side stand switch (410) is fixed by the user. But if the condition laid down in the step 207 gets failed to satisfy then the vehicle remains in cut-off. The user, then, in order to restart the ignition system, has to switch OFF and then switch ON the ignition key and follow the same sequence as mentioned in step 207 in order to override the ignition cut-off condition due to damaged or malfunctioning side stand switch.

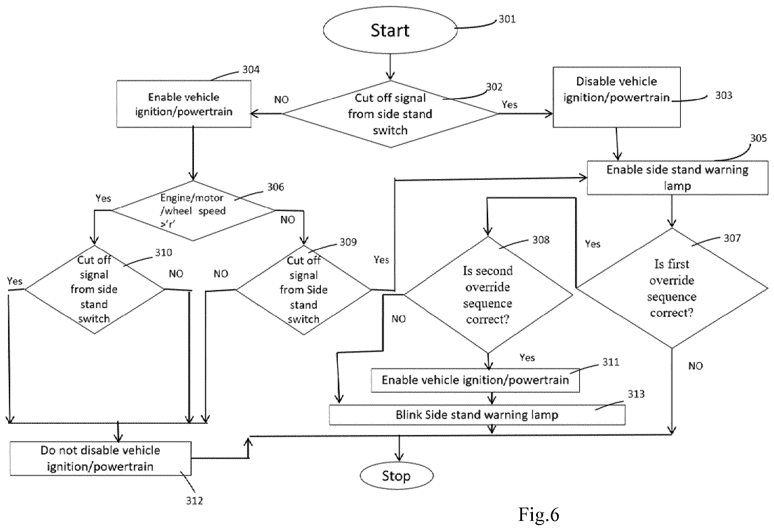

Another embodiment is represented in the **Fig. 6** where multiple input units are used to feed the multiple override sequence to overcome the ignition cut-off condition of the vehicle. Fig. 6 illustrates multiple inputs for first and second override sequence like a clutch switch and a throttle input to re initiate the ignition after the ignition gets cut -off due to the signal received by the vehicle controller (506) by one of the sensors like the side stand switch or roll over switch (410).

Similar to the first embodiment explained in fig.5 in step 301, to start the ignition the ignition key is turned ON. Then the ignition system controller checks for the cut-off signal from the side stand switch (410) in step 302. If there is no ignition cut-off signal received by the vehicle controller (506) then in step 304 the ignition of the vehicle is initiated otherwise the ignition system controller receives the ignition cut-off signal from the side stand switch (410) and the vehicle ignition gets disabled in step 303. When the engine ignition is in ON state, it is necessary to check for the speed at which the vehicle is running. Since, the working of the side stand switch (410) may have negative consequence on the vehicle running at higher speed. Sudden ignition cut off at a high speed may cause an accident. Therefore, it is important that the side stand switch (410) functions properly and if not the side switch stand should not disturb the vehicle when running especially at higher speed for safety purpose. Therefore, the ignition system controller checks for the speed of the vehicle in step 306 which is dependent on the rotations per minute. If the RPM (rotations per minute) of the engine or an electric motor or the speed of the wheel is greater than a predetermined speed value 'r' (value set by the manufacturers) then in step 310 the vehicle controller (506) checks whether any fault is there in the side stand switch (410) or erratic functioning of the side stand sensor. In both the condition the side stand signal will not have any effect on the vehicle and on the ignition system The vehicle remains in the running state till the engine (or wheel) RPM remains greater than predetermined value of 'r'. But when the engine RPM or the speed of the wheel falls below the value 'r' further the vehicle controller (506) constantly scans for the status of the side stand switch (410) for the powertrain cut-off signal in step 309. Under this condition if, due to any malfunction, damage, or erratic functioning of the side stand switch, the side stand switch (410) gives the cutoff signal the side stand warning lamp gets enabled in step (305s). Whenever the side stand switch (410) gets damaged or it starts malfunctioning, the side stand warning lamp gets enabled.

Similar to fig. 5 in order to overcome the disabled condition of the ignition the user overrides the ignition cut-off by using one input unit or combination of input units to feed multiple override sequences and re initiate the powertrain system of the vehicle.

In order to enter override sequence, the ignition key is turned ON after which the user gets fixed quantum of time to enter the sequence otherwise if the user fails to enter the override sequence, the vehicle remains in cut-off and again the user has to feed override sequence by switching OFF the ignition key and turning it ON again. It is necessary to keep the quantum of time to feed the override sequence limited in order to avoid any involuntary feeding of the sequence by the user.

In step 307, first override sequence is entered after the ignition key is switched ON, within 'Z' seconds the clutch switch is pressed 'X' number of times where value of time 'Z' seconds & 'X' presses can be set by the manufacturers.

If the first override sequence gets accepted in step 307 then the vehicle controller (506) takes the input from the throttle in step 308 for the second override sequence. In step 308 the throttle is applied more than 'W%' of the total limit of the throttle within 'Z' time quantum, where the 'W%' is the predetermined percentage set by the manufacturers. If the second override sequence also gets accepted in step 308 then the ignition system controller enables the powertrain system of the vehicle in step 311 and the side stand warning lamp keeps on blinking (step 313) till the time the side stand switch (410) is fixed by the user. But if the condition in the step 308 in not satisfied then the vehicle ignition gets switched OFF. The user, then, in order to restart the ignition system has to switch OFF and then switch ON the ignition key and follow the same sequence as mentioned in step 307 and step 308 in order to override the ignition OFF condition. The first override sequence and second override sequence can be configured to be either simultaneously or sequentially. In case of consecutive, when first override sequence fails the second override sequence needs to be entered within 'Z' seconds. If the first override sequence fails but second override sequence gets verified within 'Z' time, the powertrain gets enabled. When the powertrain is switched ON but the entered sequence is incorrect the warning lamp will continue to blink and powertrain train remains in cut-off mode. But if the override sequence is correct then the lamp starts blinking.

Arrows provided in the top right corner in any of the figure depicts direction with respect to the two-wheeled vehicle (100), wherein an arrow **F** denotes front direction, an arrow **R** indicated Rear direction, **T** denotes top and **D** denotes down direction as and where applicable.

## Claims

1. An override system for a saddle type vehicle (100) comprising:
one or more powertrains (408, 505) to power said vehicle (100), said one or more powertrains (408, 505) electrically controlled by a vehicle controller (506), said vehicle controller (506) comprises one or more driver circuits; one or more controlling means configured to said one or more powertrains (408,505) through said one or more driver circuits to control function of said one or more powertrain (408, 505); an alert means to indicate a warning; one or more input units electrically connected to said vehicle controller (506), combination of said one or more inputs to enable actuation of said one or more powertrain (408, 505) within a predetermined quantum of time (Z) through said one or more driver circuits (406a, 506a) provided in said vehicle controller (506) to overcome disabled said one or more powertrains (408, 505); said one or more alert means enabled by said vehicle controller (506) after actuation of said one or more powertrain (408, 505);
**characterized in that**,
one or more alert means to indicate disabled said one or more controlling means, said predetermined quantum of time (Z) is calculated from turning ON of an ignition key.

2. The override system for a saddle type vehicle (100) as claimed in claim 1, wherein said one or more alert means are an instrument cluster display (412) or a warning lamp.

3. The override system for a saddle type vehicle (100) as claimed in claim 1, wherein said one or more powertrain is an engine (408) or an electric motor (505) or a combination of said engine (408) and said electric motor (505).

4. The override system for a saddle type vehicle (100) as claimed in claim 1 or claim 2, wherein said one or more input units is a clutch switch (405), a throttle position sensor (409), a brake switch (510), a mode switch (507).

5. The override system for a saddle type vehicle (100) as claimed in claim 1, wherein said one or more driver circuits are an ignition driver circuit and a motor driver circuit.

6. A method to override one or more powertrain cut-off of a saddle type vehicle (100) comprising steps of:
checking for a signal from one or more controlling means after an ignition key is restarted;
sensing failure of one or more controlling means by a controller;
indicating failure of said one or more controlling means on one or more alert means by said controller;
overriding said failure of said controlling means by actuating at least one input device to one or more powertrain; and
enabling said one or more powertrain after entering an override sequence within a predetermined quantum of time (Z), wherein the predetermined quantum of time (Z) is calculated from turning ON of an ignition key.

7. The method to override one or more powertrain cut-off of a saddle type vehicle (100) as claimed in claim 6, wherein said one or more override sequence is fed through anyone of a clutch switch, a throttle, a brake witch, a mode switch.

8. The method to override one or more powertrain cut-off of a saddle type vehicle (100) as claimed in claim 6, wherein said failure indication is indicated on one or more alert means after a cut-off signal received by said controller.

9. The method to override one or more powertrain cut-off of a saddle type vehicle (100) as claimed in claim 6, wherein said one or more alert means are an instrument cluster display (412) or a warning lamp.

10. The method to override one or more powertrain cut-off of a saddle type vehicle (100) as claimed in claim 6, wherein said one or more override sequence is entered either simultaneously or sequentially.

11. The method to override one or more powertrain cut-off of a saddle type vehicle (100) as claimed in claim 6, wherein said one or more override sequence can be fed over multiple attempts.

## Patentansprüche

1. Ein Übersteuerungssystem für ein Fahrzeug (100) vom Satteltyp, das Folgendes umfasst:
einen oder mehrere Antriebsstrang(e) (408, 505) zum Antreiben des Fahrzeugs (100), wobei der eine oder die mehreren Antriebsstrang(e) (408, 505) elektrisch durch eine Fahrzeugsteuerung (506) gesteuert werden, wobei die Fahrzeugsteuerung (506) einen oder mehrere Treiberschaltkreise umfasst; ein oder mehrere Steuermittel, die für den einen oder die mehreren Antriebsstrang(e) (408, 505) durch den einen oder die mehreren Treiberschaltkreise konfiguriert sind, um die Funktion des einen oder der mehreren Antriebsstrang(e) (408, 505) zu steuern;ein Warnmittel, um eine Warnung anzuzeigen; eine oder mehrere Eingabeeinheiten, die elektrisch mit der Fahrzeugsteuerung (506) verbunden sind, wobei die Kombination des einen oder der mehreren Eingänge die Betätigung des einen oder der mehreren Antriebsstränge (408, 505) innerhalb eines vorbestimmten Zeitquantums (Z) durch die eine oder die mehreren Treiberschaltungen (406a, 506a), die in der Fahrzeugsteuerung (506) vorgesehen sind, ermöglicht, um die Blockierung des einen oder der mehreren Antriebsstränge (408, 505) zu überwinden;wobei das eine oder die mehreren Warnmittel durch die Fahrzeugsteuerung (506) nach der Betätigung des einen oder der mehreren Antriebsstränge (408, 505) aktiviert werden;
**dadurch gekennzeichnet, dass**,
ein oder mehrere Warnmittel, um anzuzeigen, dass das eine oder die mehreren Steuermittel deaktiviert sind,
das vorbestimmte Zeitquantum (Z) vom Einschalten eines Zündschlüssels an berechnet wird.

2. Übersteuerungssystem für ein sattelförmiges Fahrzeug (100) nach Anspruch 1, wobei das eine oder die mehreren Warnmittel eine Instrumentenanzeige (412) oder eine Warnlampe sind.

3. Übersteuerungssystem für ein sattelartiges Fahrzeug (100) nach Anspruch 1, wobei der eine oder mehrere Antriebsstrang ein Verbrennungsmotor (408) oder ein Elektromotor (505) oder eine Kombination aus dem Verbrennungsmotor (408) und dem Elektromotor (505) ist.

4. Übersteuerungssystem für ein sattelförmiges Fahrzeug (100) nach Anspruch 1 oder Anspruch 2, wobei die eine oder die mehreren Eingabeeinheiten ein Kupplungsschalter (405), ein Drosselklappenstellungssensor (409), ein Bremsschalter (510), ein Betriebsartenschalter (507) ist.

5. Übersteuerungssystem für ein sattelförmiges Fahrzeug (100) nach Anspruch 1, wobei es sich bei dem einen oder den mehreren Treiberkreisen um einen Zündungstreiberkreis und einen Motortreiberkreis handelt.

6. Verfahren zum Übersteuern einer oder mehrerer Antriebsstrangabschaltungen eines sattelförmigen Fahrzeugs (100), das die folgenden Schritte umfasst::
Prüfen auf ein Signal von einem oder mehreren Steuermitteln, nachdem ein Zündschlüssel neu gestartet wurde;
Erfassen des Ausfalls eines oder mehrerer Steuermittel durch ein Steuergerät;
Anzeigen des Ausfalls des einen oder der mehreren Steuermittel auf einem oder mehreren Warnmitteln durch das Steuergerät;
Außerkraftsetzen des Ausfalls der Steuermittel durch Betätigen mindestens einer Eingabevorrichtung für einen oder mehrere Antriebsstrang(e); und
Freigeben des einen oder der mehreren Antriebsstrang(e) nach Eingabe einer Übersteuerungssequenz innerhalb eines vorbestimmten Zeitquantums (Z), wobei das vorbestimmte Zeitquantum (Z) ab dem Einschalten eines Zündschlüssels berechnet wird.

7. Verfahren zum Übersteuern einer oder mehrerer Antriebsstrangabschaltungen eines sattelförmigen Fahrzeugs (100) nach Anspruch 6, wobei die eine oder mehrere Übersteuerungssequenzen über einen Kupplungsschalter, eine Drosselklappe, einen Bremsschalter oder einen Betriebsartenschalter eingegeben werden.

8. Verfahren zum Übersteuern einer oder mehrerer Antriebsstrangabschaltungen eines sattelförmigen Fahrzeugs (100) nach Anspruch 6, wobei die Fehleranzeige auf einem oder mehreren Warnmitteln nach einem von dem Steuergerät empfangenen Abschaltsignal angezeigt wird.

9. Verfahren zum Übersteuern einer oder mehrerer Antriebsstrangabschaltungen eines sattelförmigen Fahrzeugs (100) nach Anspruch 6, wobei es sich bei dem einen oder den mehreren Warnmitteln um eine Kombiinstrumentanzeige (412) oder eine Warnlampe handelt.

10. Verfahren zum Übersteuern einer oder mehrerer Antriebsstrangabschaltungen eines Fahrzeugs (100) vom Satteltyp nach Anspruch 6, wobei die eine oder mehrere Übersteuerungssequenzen entweder gleichzeitig oder nacheinander eingegeben werden.

11. Verfahren zum Übersteuern einer oder mehrerer Antriebsstrangabschaltungen eines Fahrzeugs (100) vom Satteltyp nach Anspruch 6, wobei die eine oder mehrere Übersteuerungssequenzen über mehrere Versuche eingegeben werden können.

## Revendications

1. Système de commande prioritaire pour un véhicule de type selle (100) comprenant :
un ou plusieurs groupes motopropulseurs (408, 505) pour propulser ledit véhicule (100), lesdits un ou plusieurs groupes motopropulseurs (408, 505) étant commandés électriquement par un contrôleur de véhicule (506), ledit contrôleur de véhicule (506) comprenant un ou plusieurs circuits d'attaque ; un ou plusieurs moyens de commande configurés pour lesdits un ou plusieurs groupes motopropulseurs (408, 505) par l'intermédiaire desdits un ou plusieurs circuits d'attaque pour commander la fonction desdits un ou plusieurs groupes motopropulseurs (408, 505) ;un moyen d'alerte pour indiquer un avertissement ; une ou plusieurs unités d'entrée connectées électriquement audit contrôleur de véhicule (506), la combinaison desdites une ou plusieurs entrées pour permettre l'actionnement dudit un ou plusieurs groupes motopropulseurs (408, 505) dans un laps de temps prédéterminé (Z) par l'intermédiaire desdits un ou plusieurs circuits d'attaque (406a, 506a) prévus dans ledit contrôleur de véhicule (506) pour surmonter la désactivation desdits un ou plusieurs groupes motopropulseurs (408, 505) ;lesdits un ou plusieurs moyens d'alerte activés par ledit contrôleur de véhicule (506) après l'actionnement desdits un ou plusieurs groupes motopropulseurs (408, 505) ;
**caractérisé en ce que**,
un ou plusieurs moyens d'alerte pour indiquer que lesdits un ou plusieurs moyens de commande sont désactivés,
ledit quantum de temps prédéterminé (Z) est calculé à partir de la mise en marche d'une clé de contact.

2. Système de commande prioritaire pour un véhicule de type selle (100) selon la revendication 1, dans lequel lesdits un ou plusieurs moyens d'alerte sont un affichage de groupe d'instruments (412) ou une lampe témoin.

3. Système de commande prioritaire pour un véhicule de type selle (100) selon la revendication 1, dans lequel ledit un ou plusieurs groupes motopropulseurs sont un moteur (408) ou un moteur électrique (505) ou une combinaison dudit moteur (408) et dudit moteur électrique (505).

4. Système de commande prioritaire pour un véhicule de type selle (100) selon la revendication 1 ou la revendication 2, dans lequel ladite une ou plusieurs unités d'entrée est un commutateur d'embrayage (405), un capteur de position de papillon des gaz (409), un commutateur de frein (510), un commutateur de mode (507).

5. Système de commande prioritaire pour un véhicule de type selle (100) selon la revendication 1, dans lequel lesdits un ou plusieurs circuits de commande sont un circuit de commande d'allumage et un circuit de commande de moteur.

6. Procédé de neutralisation d'une ou plusieurs coupures du groupe motopropulseur d'un véhicule de type selle (100) comprenant les étapes suivantes
vérification d'un signal provenant d'un ou de plusieurs moyens de commande après la remise en marche d'une clé de contact ;
détection de la défaillance d'un ou de plusieurs moyens de commande par un contrôleur ;
indiquer la défaillance desdits un ou plusieurs moyens de commande sur un ou plusieurs moyens d'alerte par ledit contrôleur ;
contourner ladite défaillance desdits moyens de commande en actionnant au moins un dispositif d'entrée vers un ou plusieurs groupes motopropulseurs ; et
activer ledit un ou plusieurs groupes motopropulseurs après avoir entré une séquence d'annulation dans un quantum de temps prédéterminé (Z), dans lequel le quantum de temps prédéterminé (Z) est calculé à partir de la mise en marche d'une clé de contact.

7. Procédé de commande prioritaire d'une ou plusieurs coupures du groupe motopropulseur d'un véhicule de type selle (100) selon la revendication 6, dans lequel ladite une ou plusieurs séquences prioritaires sont fournies par l'un quelconque d'un commutateur d'embrayage, d'un accélérateur, d'un commutateur de frein, d'un commutateur de mode.

8. Procédé de commande d'une ou plusieurs coupures du groupe motopropulseur d'un véhicule de type selle (100) selon la revendication 6, dans lequel ladite indication de défaillance est indiquée sur un ou plusieurs moyens d'alerte après un signal de coupure reçu par ledit contrôleur.

9. Procédé de commande d'une ou plusieurs coupures du groupe motopropulseur d'un véhicule de type selle (100) selon la revendication 6, dans lequel lesdits un ou plusieurs moyens d'alerte sont un affichage de groupe d'instruments (412) ou une lampe d'avertissement.

10. Procédé de commande d'une ou plusieurs coupures du groupe motopropulseur d'un véhicule de type selle (100) selon la revendication 6, dans lequel ladite une ou plusieurs séquences de commande sont entrées soit simultanément, soit séquentiellement.

11. Procédé de commande d'une ou plusieurs coupures du groupe motopropulseur d'un véhicule de type selle (100) selon la revendication 6, dans lequel ladite une ou plusieurs séquences de commande peuvent être introduites sur plusieurs tentatives.
